# EUROPÄISCHE PATENTSCHRIFT

(11) **EP 0 853 026 B1**
(45) Veröffentlichungstag und Bekanntmachung des Hinweises auf die Patenterteilung: **23.07.2003**
(21) Anmeldenummer: 97118907.1
(22) Anmeldetag: 30.10.1997
(51) Int. Cl.: B60R 21/16

(54) **Gassack sowie ein Verfahren und eine Vorrichtung zum Falten des Gassackes für ein Insassenrückhaltesystem**
Airbag for an occupant restraint system and a method and an apparatus for folding said airbag
Sac de sécurité gonflable pour un systèm de retenue des occupants ainsi qu'un procédé et un dispositif pour le pliage d'un tel sac

(30) Priorität: 10.01.1997 DE 19700433
(43) Veröffentlichungstag der Anmeldung: 15.07.1998
(73) Patentinhaber: Preh-Werke GmbH & Co. KG, 97616 Bad Neustadt a.d. Saale (DE)
(72) Erfinder: Bardroff, Hans, 97618 Hohenroth (DE)
(74) Vertreter: Dietrich, Barbara

(56) Entgegenhaltungen:
- WO-A-97/48580
- DE-A- 2 251 493
- GB-A- 2 315 050
- PATENT ABSTRACTS OF JAPAN vol. 096, no. 010, 31.Oktober 1996 & JP 08 142790 A (TOYOTA MOTOR CORP), 4.Juni 1996,
- PATENT ABSTRACTS OF JAPAN vol. 018, no. 653 (M-1720), 12.Dezember 1994 & JP 06 255437 A (TAKATA KK;OTHERS: 01), 13.September 1994,

## Beschreibung

Die Erfindung betrifft einen Gassack nach dem Oberbegriff des Patentanspruchs 1, ein Verfahren zum Falten des Gassackes nach dem Oberbegriff des Patentanspruchs 2 sowie eine Vorrichtung nach dem Oberbegriff des Patentanspruchs 3.

Die DE 44 22 276 A1 offenbart einen Luftsack, ein Verfahren zu seiner Faltung und eine Vorrichtung zur Durchführung des Faltverfahrens nach dem jeweiligen Oberbegriff. Dabei besteht die Aufgabe unter anderem darin, einen Luftsack zu schaffen, der sich sehr schnell und ungehindert und nach Möglichkeit auch in alle Richtungen gleichzeitig entfalten kann. Dazu besitzt der Luftsack Haupt- und Nebenfaltlinien. Von einem gedachten Zentrum des ausgebreiteten Luftsackes ausgehend, folgt eine Art konzentrische Zick-Zack- bzw. Ziehharmonikafaltung. Das wechselseitige Falten erfolgt mit Hilfe von ineinander geschachtelten schalenartigen Elementen mit zylindrischen Wänden, wobei die Durchmesser der einander gegenüberliegend angeordneten schalenartigen Elementen verschieden. Radiale Faltelemente als Raffelemente, die paarweise einander gegenüberliegend angeordnet sind, werden nacheinander paarweise in radialer Richtung nach innen bewegt und zusammengedrückt. Dabei wird das nächste äußere Faltelement entfernt und die Raffelemente weiter nach innen verfahren. Im letzten Schritt wird die Raffvorrichtung zusammen mit dem Luftsack in eine Packvorrichtung verfahren.

In der DE 195 16 264 C1 ist eine Raffvorrichtung offenbart, bei der die Raffelementenenden geschlitzt und so geführt werden, daß sie sich in ihren Enden kreuzen. Diese Enden treten weiter heraus, wenn die Raffelemente ineinander verschoben werden.

In der DE 22 51 493 A1 wird ein aufblasbarer Gassack in eine Mehrzahl von Schichten gewickelt und über die gesamte Breite des Sackes longitunal zum Gasgenerator angeordnet. Diese Wicklung erfolgt doppellagig, wobei jeweils die Aussenseiten der oberen und unteren Gassackflächen aneinander zu liegen kommen, so dass sich die entstehende Materialrolle praktisch in den ausgebreiteten Sack hinein in Richtung Gasgenerator bewegt., der sich an einer der Schmalseiten des Sackes befindet und direkter Bestandteil des Kissens ist, d. h. der Gasgenerator wird vom Kissen umschlossen. Die dem Gasgenerator gegenüberliegende Seite wird als Wickelanfang definiert und nach innen eingerollt. Die weiteren Schichten legen sich dabei um diesen Wickelanfang herum. In einer Seitendarstellung ist der Gassack schneckenförmig und gleichmässig aufgefaltet und vor dem Gasgenerator angeordnet.

In JP 08 142 790 A wird ein entfaltbarer Seiten-Gassack doppellagig in eine Spiralform gewunden und longitunal vor einem Gasgenerator angebracht. Der Gasgenerator entlädt sich in das freie Ende des spiralförmig gewickelten Gassackes.

In JP 06 255 437 A ist ein Gasgenerator annähernd mittig im Gassack angeordnet. Der Gassack besitzt eine untere und eine obere Gewebefläche, wobei der Gasgenerator an der unteren Gewebefläche befestigt ist. Ein Bereich des Gassackes ist der Länge nach in Spiralform gewickelt und über eine Seite des Generators gelegt. Ein zweiter Bereich ist zick-zackförmig gefaltet und über die andere Seite des Generators gelegt.

Die DE 195 35 564 A1 offenbart ein Verfahren und eine Vorrichtung zur Faltung eines Gassackes für ein Airbagmodul. Dabei erfolgt die Faltung durch Ansaugen des Luftsackes vom Ober- oder Unterteil des Faltwerkzeuges. Sogenannte Faltelemente sind nicht vorgesehen. Das Raffelement ist ein Spannband, das mit Hilfe von Umlenkrollen von einem Druckzylinder gezogen wird, wobei dieses Spannband von Spannbacken getragen wird, die dabei ihre Lage mit verändern bis sie an einer justierbaren Anschlag-Grundplatte anliegen.

Ein weiteres Verfahren der gattungsgemäßen Art stellt die DE 195 16 494 C1 dar. Hierbei wird der Gassack vor Beginn der Faltung in seine Gebrauchsform gebracht, d. h. aufgeblasen, wobei eine Basis-Gewebefläche des Gassackes auf eine Arbeitsplattform angeordnet und die andere Gewebefläche gewölbt ist. In diesem Zustand greifen mechanische Falthilfen in den Gassack ein und falten diesen einlagig. Dieses Verfahren ist für den Automatisierungsprozeß des Faltens zu aufwendig und läßt sich schwer handhaben, da einerseits der kontinuierliche Gaszufuhr/-austritt gewährleistet sein muß oder aber zusätzliche Einrichtungen, die den Gassack in seine Gebrauchsform beim Falten halten, in Abstimmung mit den Falthilfen gebracht werden müssen.

Die Aufgabe der Erfindung besteht darin, einen Gassack sowie ein Verfahren für das automatisierte Falten des Gassackes und eine Vorrichtung anzugeben.

Gelöst wird die Aufgabe durch die Merkmale der Patentansprüche 1 und 2. Eine Vorrichtung zur Lösung der Aufgabe gibt der Patentanspruch 3 an.
Dadurch, daß der Gassack in unaufgeblasenem Zustand gefalten wird, ist dieser sehr leicht zu handhaben und in einem automatischen Faltprozeß zu falten.

Durch die spiralförmige Faltgestalt, in die der Gassack gebracht wird, wird auch bei Doppellagigkeit die kontinuierliche Durchströmung beim Öffnen des Gassackes gewährleistet, wobei auch bei einem schlagartigen Gaseinströmen durch den Gaseinlaß am Gassack sich die notwendige Entfaltung des Gassackes einstellt.

Vorteilhafte Ausführungen sind in den Unteransprüchen enthalten.

Durch die zeitliche Abfolge des Eingreifens der Falthilfen wird ein sauberes und kontinuierliches Falten des Gassackes erreicht.

Das Entweichen von im Gassack befindlicher Restluft ist während des Faltens durch den am Gassack vorhandenen Gaseinlaß ohne Probleme möglich.

Anhand eines Ausführungsbeispieles mit Zeichnung soll die Erfindung näher erläutert werden.

Es zeigen:
Fig. 1
   eine perspektivische Darstellung eines Faltwerkzeuges in den wichtigsten Einzelteilen,
Fig. 2
   eine perspektivische Darstellung des Faltwerkzeuges in Arbeitsstellung,
Fig. 3
   eine perspektivische Darstellung des Faltwerkzeuges in Entnahmestellung,
Fig. 4
   eine perspektivische Darstellung einer Falthilfe,
Fig. 5
   eine perspektivische Darstellung einer Spannvorrichtung
Fig. 5a
   eine perspektivische Darstellung der Spannvorrichtung beim Spannvorgang
Fig. 6
   eine Schnittdarstellung des Faltwerkzeuges mit einem aufgelegten Gassack,
Fig. 7
   den Gassack in gefalteter Form als Schnittdarstellung,
Fig. 8
   ein Gehäuse für den Gassack.

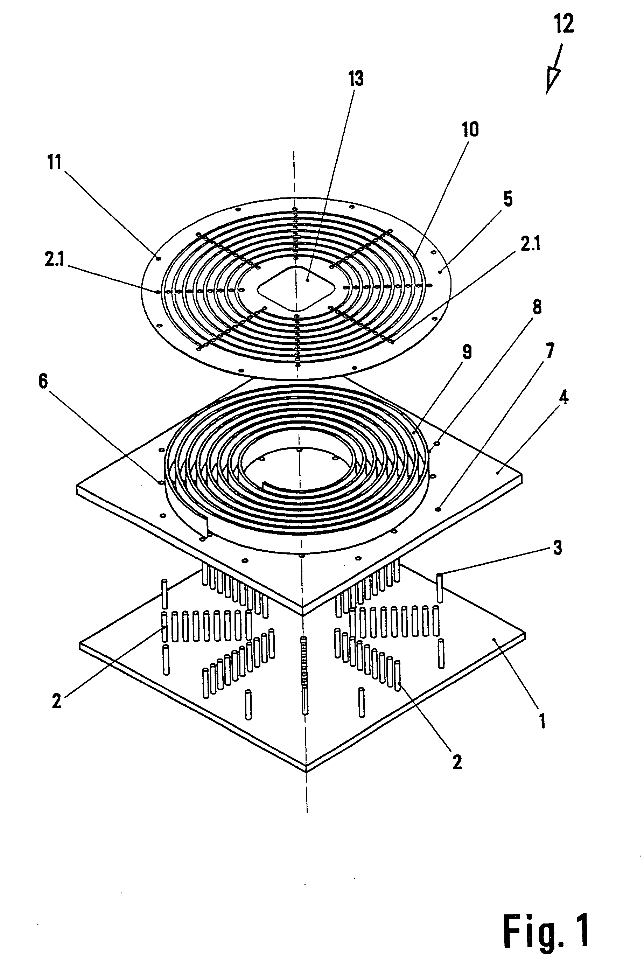

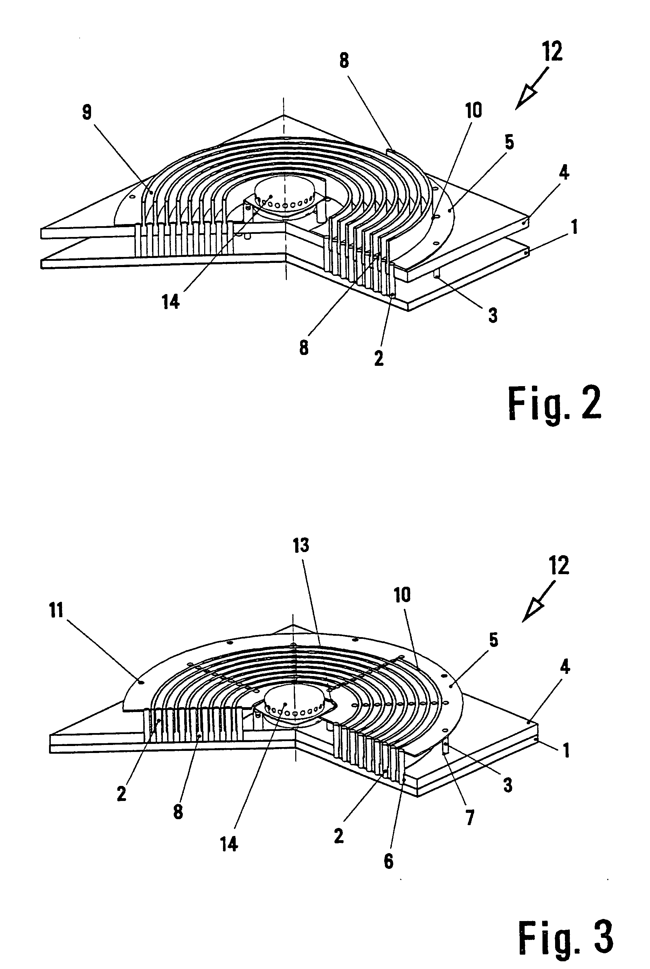

Fig. 1 zeigt eine Halteplatte 1 mit Haltestiften 2, die senkrecht zur Oberfläche auf der Halteplatte 1 angebracht sind. Weitere Befestigungsstifte 3, dienen zur späteren Ausrichtung einer Zwischenplatte 4 und einer Formplatte 5 zueinander. Die separate Zwischenplatte 4 weist runde Durchführungen 6, die in den selben Abständen wie die Haltestifte 2 zur Aufnahme dieser Haltestifte 2 in der Zwischenplatte 4 eingearbeitet sind, sowie Durchführungen 7 zur Aufnahme der Befestigungsstifte 3 auf. Auf der Zwischenplatte 4 ist ein Band 8, das von innen nach außen spiralförmig geführt ist, angeordnet. Der Verlauf des spiralförmigen Bandes 8 ist den Durchführungen 6 zugeordnet. Dabei liegen die Durchführungen 6 im spiralförmigen Freiraum 9, der sich zwischen den einzelnen Spiralbögen des Bandes 8 befindet. Die Formplatte 5 weist einen spiralförmigen Einschnitt 10 auf, durch den das spiralförmige Band 8 hindurchtreten kann. Am Außenrand befinden sich Durchführungen 11 zur Aufnahme der Befestigungsstifte 3 der Halteplatte 1. Die vorgenannten Elemente bilden zusammen ein Faltwerkzeug 12, das in einer nicht näher dargestellten Maschine integriert ist. Zur Erhöhung der Stabilität des Faltwerkzeuges 12 weist die Formplatte 5 vorzugsweise Durchführungen 2.1 auf, die in den selben Abständen wie die Durchführungen 6 der Zwischenplatte 4 eingearbeitet sind. Mittig in der Formplatte 5 befindet sich eine Ausnehmung 13 zur Aufnahme eines Gasgenerators 14 (vergleiche Figur 2).

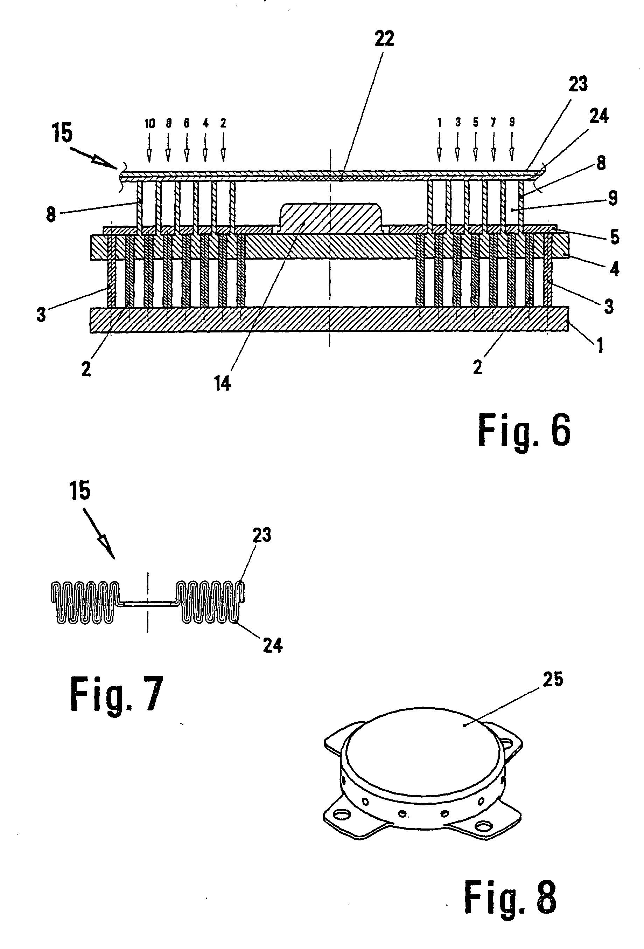

In Figur 2 ist ein Zusammenwirken der einzelnen Teile des Faltwerkzeuges 12 erkennbar. In dieser Stellung des Faltwerkzeuges 12 erfolgt das Einfalten eines Gassackes 15 (vergleiche Figur 6).
Mit Figur 3 nimmt das Faltwerkzeug 12 die Entnahmestellung für den gefalteten Gassack 15 ein.

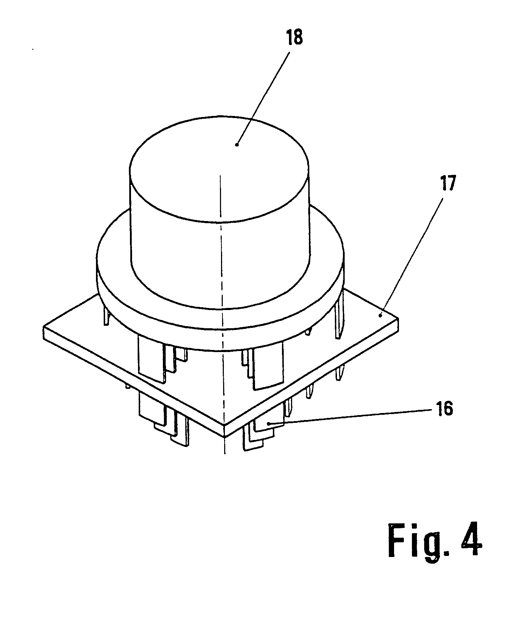

In Figur 4 sind Falthilfen 16 dargestellt, die durch eine Platte 17 durchragen und von einem Gehäuse 18 getragen werden. Die Platte 17 hat dabei die Aufgabe, die Falthilfen 16 in definierten Abständen zueinander zu halten.

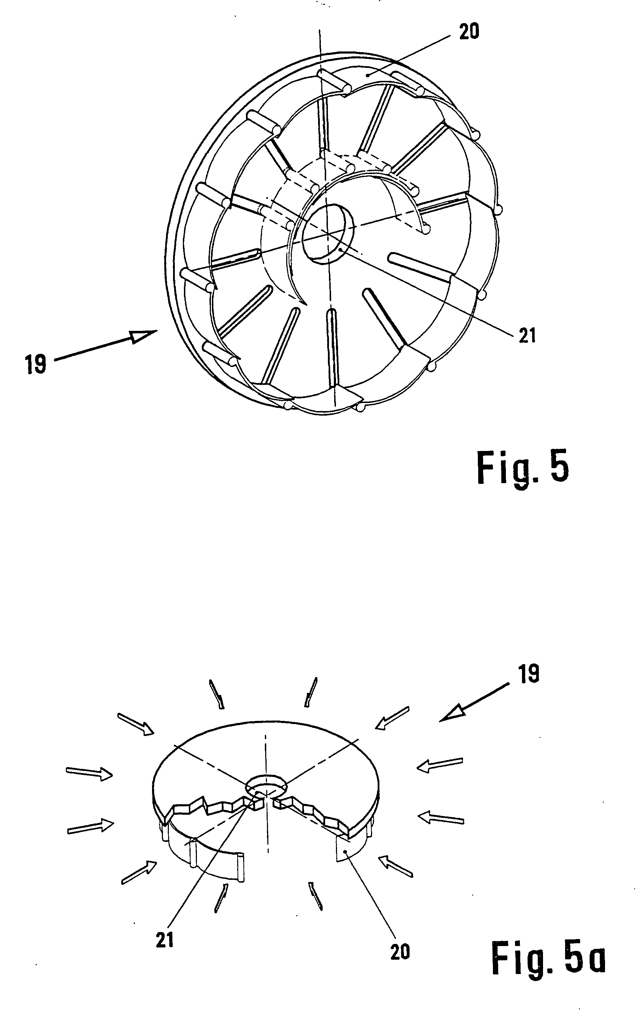

In Figur 5 ist eine Spanneinrichtung 19 zum Zusammenspannen des gefalteten Gassackes 15 angegeben. An der Spanneinrichtung 19 befinden sich Segmente 20, die sich überlappen, so daß sie sich, wie in Figur 5a mit Pfeilen angedeutet, beim Zusammenziehen gegeneinander verschieben und damit den inneren Durchmesser der Spanneinrichtung 19 verengen (siehe dazu gestrichelte Darstellung in Figur 5).

Der Faltvorgang läuft in Zusammenschau der Figuren wie folgt ab:

Wie in Figur 6 dargestellt, wird die Zwischenplatte 4 gegenüber der Halteplatte 1 so nach unten verfahren, daß die Haltestifte 2 durch die Durchführungen 6 der Zwischenplatte 4 greifen. Gleichzeitig wird die Formplatte 5 auf die Zwischenplatte 4 zu bewegt, so daß das spiralförmige Band 8 durch den spiralförmigen Einschnitt 10 tritt und das Faltwerkzeug 12 die Arbeitsstellung, wie in Figur 2 dargestellt, einnimmt, wobei die Haltestifte 2 gleichfalls durch die Durchführungen 2.1 greifen. Die Zwischenplatte 4 hat einen definierten Abstand zur Halteplatte 1 (maschinell gehalten). Die Formplatte 5 schließt vorzugsweise mit den Enden der Haltestifte 2 ab. Durch die Befestigungsstifte 3 erfolgt die bereits erwähnte Justierung der Platten 1,4, 5 zueinander. Die Formplatte 5 und die Halteplatte 1 werden durch die Befestigungsstifte 3 miteinander fest verbunden und zueinander beabstandet, so daß nur die Zwischenplatte 4 beweglich geführt werden kann. Der Gassack 15 wird mittig auf die Formplatte 5 gebracht, so daß eine am Gassack 15 befindliche Ausnehmung 22 für den Gasgenerator 14 auf dem Gasgenerator 14, der in die Mitte des Faltwerkzeuges 12 eingebracht wurde, frei aufliegt. Der Gassack 15 liegt plan und doppellagig auf dem durch die Formplatte 5 greifenden Band 8 auf. Die dazu positionierten Falthilfen 16 wirken von oben auf den Gassack 15 zum eigentlichen Falten.

Dazu drücken die Falthilfen 16 den Gassack 15 von innen ab dem Bereich des Gasgenerators 14 nach außen entlang des Bandes 8 in eine spiralförmige Vertiefung. Die spiralförmige Vertiefung stellt sich in Verbindung mit der Oberfläche der Formplatte 5 und dem zwischen den Windungen des spiralförmigen Bandes 8 gebildeten Freiraumes 9 dar.
Der Gassack 15, der aus einer oberen Gewebefläche 23 und einer unteren Gewebefläche 24 mit der bereits erwähnten Ausnehmung 22 besteht, wird durch die Falthilfen 16 in die Vertiefung nach und nach zweilagig in Form einer Spirale gefaltet. Dieser Spiralform ist die Anordnung der Falthilfen 16 im Gehäuse 18 angepaßt, wobei die Falthilfen 16 vorzugsweise von innen nach außen hin in Ruhestellung abgestuft angeordnet sind.

Dadurch greifen zuerst die inneren Falthilfen 16 auf den Gassack 15 und folgen der in Fig. 6 mit den kleinen Zahlen 1 bis 10 dargestellten Reihenfolge, bis der gesamte Gassack 15 gefaltet und in der Vertiefung entlang des Bandes 8 liegt. Das Eingreifen der Falthilfen 16 erfolgt dabei in einem vorgegebenen zeitlichen Abstand, z. B. programmgesteuert durch eine nicht dargestellte Steuereinrichtung von innen nach außen, vorzugsweise einzeln, nacheinander.

Um ein Herausrutschen des Gassackes 15 während des Faltens zu vermeiden, ist es vorteilhart, die Falthilfen 16 von innen nach außen hin in bestimmten Abständen in der Vertiefung mit dem Gassack 15 zu belassen.
Ein mittig am Gehäuse 18 befindlicher, nicht näher dargestellter Niederhalter drückt in leichter Form seinerseits die Mitte des doppellagigen Gassackes 15 gegen den Gasgenerator 14.

Nach Beendigung des eigentlichen Faltvorgangs werden die Falthilfen 16 aus den Vertiefungen, in die nun der Gassack 15 eingefaltet ist, entfernt. Nach dem Entfernen der Falthilfen 16 wird die Spannvorrichtung 19 über den gefalteten Gassack 15 gestülpt. Gleichzeitig wird die Zwischenplatte 4 bis auf die Oberfläche der Halteplatte 1 bewegt, wobei die Formplatte 5 von den Haltestiften 2 weiterhin getragen wird. Auf der Formplatte 5 bleibt, bedingt durch das Austreten des spiralförmigen Bandes 8 aus dem spiralförmigen Einschnitt 10, der gefaltete Gassack 15 ohne Gasgenerator 14 zurück, der bei der Verstellung der Zwischenplatte 4 mit abgesenkt wird. Um den gefalteten Gassack 15 (Fig. 7)in die gewünschte Form zu bringen, werden die Segmente 20 der Spannvorrichtung 19 gegeneinander verstellt, so daß eine zentrische Komprimierung des gefalteten Gassackes 15 erfolgt. Ferner wird dieser gefaltete und durch die Spanneinrichtung 19 zusammengezogene Gassack 15 in ein Gehäuse 25 eingebracht (Fig. 8). Durch die Öffnung 21 wird ein nicht näher dargestellter Stempel zum Eindrücken des gefalteten Gassackes 15 in das Gehäuse 25 geführt.

Es versteht sich von selbst, daß im Rahmen des Erfindungsgedankens Änderungen möglich sind.
So kann der Gasgenerator 14 je nach Anforderung als Bestandteil des gefalteten Gassackes 15 behandelt und gleichzeitig in das Gehäuse 25 eingedrückt werden. Es kann auch statt des Generators 14 ein in den Abmaßen gleiches Teil verwendet werden.
Auch können die abgestuften Falthilfen 16 in einem Arbeitsgang ohne zeitliche Versetzung der Falthilfen 16 in die Vertiefung eingreifen, wobei die Falthilfen 16 im Gehäuse 18 vorzugsweise mittels nicht dargestellten Federn federnd gelagert sind, so daß die zuerst eingreifenden Falthilfen 16 in ihrer Arbeitslänge (Eingreiflänge) so weit reduziert werden, daß die spiralförmig versetzten Falthilfen 16 annähernd gleichzeitig in die Vertiefung einfalten.

## Patentansprüche

1. Gassack als Bestandteil eines Insassenrückhaltesystems, insbesondere in Kraftfahrzeugen, mit einer unteren Gewebefläche (24) und einer oberen Gewebefläche (23), die im leeren und flach ausgebreiteten Zustand aufeinanderliegen, wobei an der unteren Gewebefläche ein Gasgenerator angeordnet ist, **dadurch gekennzeichnet, dass** in der unteren Gewebefläche mittig eine Ausnehmung (22) zur Aufnahme des Gasgenerators (14) eingebracht ist und der Gassack (15) doppellagig um die Ausnehmung (22) und senkrecht zur Berührungsebene der Gewebeflächen (23,24) in horizontaler Ebene fortlaufend spiralförmig eingefaltet ist.

2. Verfahren zum Falten eines aufblasbaren Gassackes, der in ein Faltwerkzeug in unaufgeblasenem Zustand eingebracht ist und in platzsparender Weise zu einer vorgegebenen Form mit vorgegebenen Volumen zusammengefaltet wird, wobei eine untere und eine obere Gewebefläche gleichmässig und zueinander doppellagig gefaltet und danach gegespannt werden, **dadurch gekennzeichnet, dass** der Gassack (15) mittig fixiert wird und ausgehend von einem gedachten Zentrum spiralförmig fortschreitend kontinuierlich wechselweise senkrecht zur horizontalen Ebene bis zum Rand des Gassackes (15) gefaltet und danach die Faltung konzentrisch in horizontaler Ebene gespannt wird.

3. Vorrichtung zur Durchführung des Verfahrens, nach Anspruch 2 welche aus einem Faltwerkzeug als Aufnahmestation für einen Gassack besteht, **dadurch gekennzeichnet, dass** das Faltwerkzeug (12) ein spiralförmiges Band (8) aufweist, zwischen dessen Windungen sich ein spiralförmiger Freiraum (9) bildet, in die senkrecht dazu eine Falthilfen (16) eingreifen und eine Spanneinrichtung (19) besitzt, die beim Spannen eine zentrische Komprimierung des Gassackes (15) bewirkt.

4. Vorrichtung nach Anspruch 3, **dadurch gekennzeichnet, dass** die Spanneinrichtung (19) aus sich überlappenden Segmenten (20) besteht und eine Öffnung (21) zum Herausdrücken des gefalteten Gassackes (15) aufweist, wobei die Spanneinrichtung (19) zum Spannen des auf dem Faltwerkzeug (12) liegenden gefalteten Gassackes (15) vertikal auf das Faltwerkzeug (12) gebracht wird.

5. Vorrichtung nach Anspruch 3 **dadurch gekennzeichnet, dass** das Faltwerkzeug (12) aus einer Halteplatte (1) mit senkrecht zur Oberfläche angeordneten Haltestiften (2) und Befestigungsstiften (3), einer Zwischenplatte (4) mit einem senkrecht zu ihrer Oberfläche der Zwischenplatte (4) spiralförmig angebrachten Band (8) und Durchführungen (6, 7) zur Aufnahme der Haltestifte (2) und Befestigungsstifte (3) sowie einer Formplatte (5), in der ein dem spiralförmig angebrachten Band (8) äquivalenter spiralförmiger Einschnitt (10) eingearbeitet ist und Durchführungen (11) zur Aufnahme der Befestitungsstifte (3) aufweist, besteht.

6. Vorrichtung nach Anspruch 3 **dadurch gekennzeichnet, dass** die Halteplatte (1) und die Formplatte (5) durch die Befestigungsstifte (3) miteinander fest verbunden und zueinander beabstandet sind und die Zwischenplatte (4) zwischen der Halteplatte (1) und der Formplatte (5) beweglich gelagert ist.

7. Vorrichtung nach Anspruch 3 **dadurch gekennzeichnet, dass** die Falthilfen (16) durch eine Platte (17) durchgeführt werden und an einem Gehäuse (18) beweglich gelagert gehalten sind, wobei die Anordnung der Falthilfen (16) im Gehäuse (18) von der Spiralform des Bandes (8) abhängig ist.

8. Vorrichtung nach Anspruch 3 **dadurch gekennzeichnet, dass** die Falthilfen (16) von innen nach aussen hin zueinander in Ruhestellung abgestuft angebracht sind.

9. Vorrichtung nach Anspruch 3 **dadurch gekennzeichnet, dass** während des Faltens die Falthilfen (16) von innen nach aussen in bestimmten Abständen in Vertiefungen mit dem Gassack (15) belassen werden.

## Claims

1. An airbag as a component of an occupant restraint system, particularly in motor vehicles, having a lower fabric surface (24) and an upper fabric surface (23) which lie on top of one another in the empty and flat extended condition, a gas generator being arranged on the lower fabric surface, **characterised in that** a cutout (22) for receiving the gas generator (14) is incorporated in the middle of the lower fabric surface, and the airbag (15) is folded in a progressive spiral shape in two layers around the cutout (22) and perpendicularly to the contact plane of the fabric surfaces (23, 24) in the horizontal plane.

2. A process for folding an inflatable airbag which is introduced into a folding tool in the non-inflated condition and is folded up into a predetermined shape with a predetermined volume in space-saving manner, a lower and an upper fabric surface being folded uniformly together in two layers and then being tensioned, **characterised in that** the airbag (15) is fixed in the middle and, starting from an imaginary centre to the edge of the airbag (15), is folded in a continuous progressive spiral shape alternately perpendicular to the horizontal plane and the fold is then tensioned concentrically in the horizontal plane.

3. A device for carrying out the process according to Claim 2, which comprises a folding tool as a receiving station for an airbag, **characterised in that** the folding tool (12) has a spiral-shaped strip (8) between whose coils a spiral-shaped gap (9) is formed in which folding aids (16) engage perpendicularly thereto, and has a tensioning means (19) which, in the course of the tensioning action, effects a centric compression of the airbag (15).

4. A device according to Claim 3, **characterised in that** the tensioning means (19) comprises mutually overlapping segments (20) and has an opening (21) for pushing out the folded airbag (15), the tensioning means (19) being moved vertically onto the folding tool (12) for the purpose of tensioning the folded airbag (15) lying on the folding tool (12).

5. A device according to Claim 3, **characterised in that** the folding tool (12) comprises a holding plate (1) having holding pins (2) and fastening pins (3) arranged perpendicularly to the surface, an intermediate plate (4) having a strip (8) mounted in a spiral shape perpendicularly to the surface of the intermediate plate (4), and guide-holes (6, 7) for receiving the holding pins (2) and fastening pints (3) and also a shaping plate (5) in which a spiral-shaped incision (10) corresponding to the spirally mounted strip (8) is incorporated, and guide-holes (11) for receiving the fastening pins (3).

6. A device according to Claim 3, **characterised in that** the holding plate (1) and the shaping plate (5) are mutually connected in fixed manner by the fastening pins (3) and are at a mutual spacing, and the intermediate plate (4) is movably mounted between the holding plate (1) and the shaping plate (5).

7. A device according to Claim 3, **characterised in that** the folding aids (16) are guided through a plate (17) and are held, movably mounted, on a housing (18), the arrangement of the folding aids (16) in the housing (18) being dependent on the spiral shape of the strip (8).

8. A device according to Claim 3, **characterised in that** the folding aids (16) are mounted mutually staggered from the inside outwards in the rest position.

9. A device according to Claim 3, **characterised in that**, during the folding procedure, the folding aids (16) are admitted into depressions with the airbag (15) from the inside outwards at particular spacings.

## Revendications

1. Airbag faisant partie d'un système de retenue pour passager, en particulier dans des véhicules automobiles, comprenant une surface tissée inférieure (24) et une surface tissée supérieure (23), qui à l'état vide et à plat sont superposées, un générateur de gaz étant disposé sur la surface tissée inférieure, **caractérisé en ce qu'**un évidement (22) destiné à recevoir le générateur de gaz (14) est réalisé au centre de la surface tissée inférieure et l'airbag (15) est plié en double couche autour de l'évidement (22) et perpendiculairement au plan de contact des surfaces tissées (23, 24) en forme de spirale continue dans un plan horizontal.

2. Procédé de pliage d'un airbag gonflable, qui est posé à l'état non gonflé dans un outil de pliage et est plié de manière à occuper peu de place pour obtenir une forme prédéfinie à volume prédéfini, une surface tissée inférieure et une surface tissée supérieure étant pliées uniformément et en double couche l'une par rapport à l'autre et étant serrées ensuite, **caractérisé en ce que** l'airbag (15) est fixé au milieu et est plié progressivement en forme de spirale continue à partir d'un centre imaginaire en alternance perpendiculairement au plan horizontal jusqu'au bord de l'airbag (15) et les plis sont serrés ensuite concentriquement dans le plan horizontal.

3. Dispositif destiné à la mise en oeuvre du procédé selon la revendication 2, qui est formé par un outil de pliage formant le poste de réception d'un airbag, **caractérisé en ce que** l'outil de pliage (12) comporte une bande (8) en forme de spirale, entre les spires de laquelle est formé un espace libre (9) en forme de spirale, dans lequel des auxiliaires de pliage (16) s'engagent perpendiculairement à celui-ci et comporte un dispositif de serrage (19), qui génère pendant le serrage une compression avec autocentrage de l'airbag (15).

4. Dispositif selon la revendication 3, **caractérisé en ce que** le dispositif de serrage (19) est formé par des segments (20) se chevauchant et un orifice (21) par lequel l'airbag (15) plié est poussé vers l'extérieur, le dispositif de serrage (19) étant amené verticalement sur l'outil de pliage (12) en vue de serrer l'airbag (15) plié, posé sur l'outil de pliage (12).

5. Dispositif selon la revendication 3, **caractérisé en ce que** l'outil de pliage (12) est formé par une plaque de support (1), munie de goujons de support (2), disposés perpendiculairement à la surface, et des goujons de fixation (3), par une plaque intermédiaire (4) avec une bande (8), disposée en forme de spirale perpendiculairement à la surface de la plaque intermédiaire (4), et des trous (6, 7) destinés à recevoir les goujons de retenue (2) et les goujons de fixation (3), ainsi que par une plaque de formage (5), dans laquelle est réalisée une entaille (10) en forme de spirale, équivalente à la bande (8) posée en spirale, et qui comporte des trous (11) destinés à recevoir les goujons de fixation (3).

6. Dispositif selon la revendication 3, **caractérisé en ce que** la plaque de support (1) et la plaque de formage (5) sont assemblées l'une à l'autre par les goujons de fixation (3) et sont disposées à distance l'une de l'autre, et la plaque intermédiaire (4) est logée de manière mobile entre la plaque de support (1) et la plaque de formage (5).

7. Dispositif selon la revendication 3, **caractérisé en ce que** les auxiliaires de pliage (16) sont guidés à travers une plaque (17) et sont logés de manière mobile dans un boîtier (18), l'agencement des auxiliaires de pliage (16) dans le boîtier (18) étant fonction de la forme de spirale de la bande (8).

8. Dispositif selon la revendication 3, **caractérisé en ce que** les auxiliaires de pliage (16) sont disposés de l'intérieur vers l'extérieur de manière décalée l'un à l'autre dans la position de repos.

9. Dispositif selon la revendication 3, **caractérisé en ce que**, pendant le pliage, les auxiliaires de pliage (16) sont maintenus avec l'airbag (15), de l'intérieur vers l'extérieur, dans des cavités à des distances définies.
